# EUROPEAN PATENT APPLICATION

(11) **EP 1 621 593 A1**
(43) Date of publication of application: **01.02.2006**
(21) Application number: 05003782.9
(22) Date of filing: 22.02.2005
(51) Int. Cl.: C09D 11/10

(54) **Inkjet ink, printed matters, and inkjet recording method**

(30) Priority: 29.07.2004 JP 2004222189
(71) Applicant: Toshiba Tec Kabushiki Kaisha, Tokyo 141-8664 (JP)
(72) Inventor: Ishibashi, Mitsuru, Toshiba Tec K.K., Shinagawa-ku Tokyo 141-8664 (JP); Ushirogouchi, Toru, Toshiba Tec K.K., Shinagawa-ku Tokyo 141-8664 (JP); Akiyama, Ryozo, Toshiba Tec K.K., Shinagawa-ku Tokyo 141-8664 (JP); Ohtsu, Kazuhiko, Toshiba Tec K.K., Shinagawa-ku Tokyo 141-8664 (JP); Hiroki, Masashi, Toshiba Tec K.K., Shinagawa-ku Tokyo 141-8664 (JP)
(74) Representative: Kramer - Barske - Schmidtchen

(57) **Abstract**

There is proposed an inkjet ink comprising a compound represented by the following general formula (1), a cationic photopolymerization initiator, a cationic photopolymerizable compound, and a pigment having an average particle diameter of 300 nm or less, wherein the cationic photopolymerization initiator is included at a ratio of 0.5% by weight to 8% by weight based on 100% by weight.of the cationic photopolymerizable compound, and the inkjet ink has a viscosity of 50 mPa·sec or less at ordinary temperature, 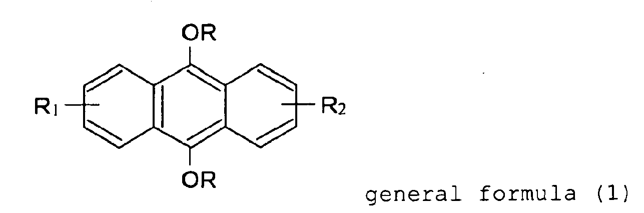 (wherein R is a monovalent organic group having 1 to 5 carbon atoms, R₁ and R₂ may be the same or different and are individually hydrogen atom or alkyl group, alkyl sulfonyl group or alkoxy group each having 1 to 3 carbon atoms).

## Description

This invention relates to an inkjet ink, printed matters, and an inkjet recording method.

In recent years, there has been an increasing demand for an inkjet type printing/recording apparatus. Namely, the inkjet type printer is expected to have an increasing demand, in place of the conventional printing machine using a printing plate, for using it not only as a printer for personal computers to be employed in an office or home, but also as a printer to be employed in a situation where a fairly large number of copies of printed matter are required in the printing of, for example, a large scale poster, a local advertisement bill and enterprise handout. This inkjet type printer is not only useful as an on-demand printer which is capable of quickly coping with the diversification of needs but also useful for printing a high-quality image at high speed.

In the case of the inkjet type printer, because of the odor and safety of the ink, water-soluble inks containing a water-soluble dye as a coloring agent have been mainly employed up to date. In recent years however, it has been increasingly proposed to employ an ink containing a pigment as a coloring agent for the purpose of improving the qualities of printing such as water resistance and light-resistance. In particular, inks of ultraviolet-curing type (UV inks) which can be readily curable, are minimal in vaporization of organic solvent and excellent in adhesion are now increasingly taken notice of.

The inks to be employed in the inkjet type printing are required to be such that the pigment in the ink is stably dispersed therein in order to maintain the discharge stability of the ink. However, the inks developed up to date are insufficient in dispersion stability of the pigments. Under certain circumstances, the pigment in the ink may flocculate to create coarse particles, thereby degrading the discharge property of the ink.

Incidentally, it is also proposed to employ a specific kind of photosensitizer for the purpose of obtaining an activation energy line-curing type composition which is capable of forming a film excellent in curing characteristics, in surface hardness, in adhesion and in solvent resistance. This composition can be employed for forming a paint, an ink or a bonding agent. For example, this composition is coated to such a thickness that makes it possible to form a cured film having a thickness ranging generally from 1 to 100 *µ*m and is then cured by irradiating the coated layer with an activation energy beam to obtain the cured film.

Therefore, one of the objects of the present invention is to provide an inkjet ink comprising pigment particles which are stably dispersed therein without being flocculated. Another object of the present invention is to provide a printed matter to be obtained by using the inkjet ink. A further object of the present invention is to provide an inkjet recording method wherein the aforementioned inkjet ink is employed.

According to one aspect of the present invention, there is provided an inkjet ink comprising:
a compound represented by the following general formula (1);
a cationic photopolymerization initiator;
a cationic photopolymerizable compound; and
a pigment having an average particle diameter of 300 nm or less;

wherein the cationic photopolymerization initiator is included at a ratio of 0.5% by weight to 8% by weight based on 100% by weight of the cationic photopolymerizable compound, and the inkjet ink has a viscosity of 50 mPa·sec or less at ordinary temperatures; 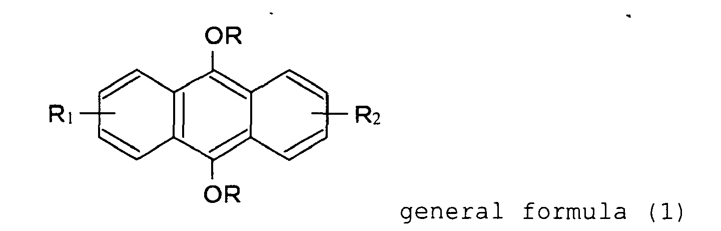
(wherein R is a monovalent organic group having 1 to 5 carbon atoms; R₁ and R₂ may be the same or different and are individually hydrogen atom or alkyl group, alkyl sulfonyl group or alkoxy group each having 1 to 3 carbon atoms).

According to another aspect of the present invention, there is provided a printed matter comprising a cured material of the aforementioned inkjet ink.

According to a further aspect of the present invention, there is provided an inkjet recording method comprising:
feeding the aforementioned inkjet ink to an ink supply passageway;
discharging the inkjet ink from an inkjet printer head to a recording medium; and
irradiating radiation to the inkjet ink which has been discharged to the recording medium to cure the inkjet ink;

wherein the inkjet ink contacts with a metallic member as the inkjet ink passes through the ink supply passageway and/or the inkjet printer head.

According to a further aspect of the present invention, there is provided an inkjet recording method comprising:
feeding the aforementioned inkjet ink to an ink supply passageway;
discharging the inkjet ink from an inkjet printer head to a recording medium;
irradiating radiation to the inkjet ink which has been discharged to the recording medium to precure the inkjet ink; and
heating the precured inkjet ink at a temperature which is not lower than that makes it possible to dissociate the RO group of the compound contained in the inkjet ink and represented by the aforementioned general formula (1);

wherein the inkjet ink contacts with a metallic member as the inkjet ink passes through the ink supply passageway and/or the inkjet printer head.

This summary of the invention does not necessarily describe all necessary features so that the invention may also be a sub-combination of these described features.

Next, various embodiments of the present invention will be explained as follows.

The present inventors have extensively studied about the stability of inkjet inks that can be cured by the irradiation of ultraviolet rays (UV inks) to find out the following facts. Namely, a cationic photopolymerization initiator (hereinafter will be referred to simply as polymerization initiator) has much to do with the flocculation of pigments in the UV ink so that the flocculation of pigments will be promoted by the presence of this polymerization initiator. Further, it has been found that when polymerization or cross-linking reaction takes place partially during the storage of the ink and hence the viscosity of the ink is increased, it will also give rise to deterioration of the dispersion stability of the pigments.

When a UV ink containing a polymerization initiator contacts with a metallic member such as an electrode in a printing apparatus, the metallic member is eroded by a compound to be generated from the polymerization initiator. In particular, if the polymerization initiator contains a photo-acid generating agent, the erosion of the metallic member is further promoted. Moreover, due to a reaction gas to be generated when the metallic member is eroded, bubbles are generated in the ink, resulting in the generation of discharge failure of the ink.

As described above, it has been found out by the present inventors that in the case of the UV inkjet ink, various problems generate due to the presence of the polymerization initiator. Whereas, in the case of the inkjet ink according to the embodiments of the present invention, a specific kind of photosensitizer is incorporated in the ink not only for the purpose of avoiding the aforementioned problems to be raised by the presence of the polymerization initiator in the conventional UV ink but also for the purpose of enhancing the curing sensitivity of the ink to ultraviolet rays. In this way, it is now possible to suppress the flocculation of pigment particles, thereby making it possible to enhance the dispersion stability and discharge stability of the ink. Moreover, it is now possible to substantially prevent the erosion of a metallic member such as the electrodes of the inkjet printer head and to perform printing excellent in quality and stability.

The photosensitizer to be incorporated in the inkjet ink according to the embodiments of the present invention is selected from anthracene diether compounds represented by the aforementioned general formula (1). As for specific examples of monovalent organic group to be introduced into the R of the general formula (1), they include, for example, alkyl group, aryl group, benzyl group, hydroxyalkyl group, alkoxyalkyl group and vinyl group.

As for specific examples of the alkyl group, they include methyl, ethyl, n-propyl, i-propyl, n-butyl, i-butyl, t-butyl, n-pentyl and i-pentyl groups. Especially preferable examples of the alkyl group are those having 1 to 5 carbon atoms. As for specific examples of the aryl group, they include, for example, phenyl, biphenyl, o-tolyl, m-tolyl and p-tolyl groups. As for specific examples of the hydroxyalkyl group, they include, for example, 2-hydroxyethyl, 3-hydroxypropyl, 2-methyl-2-hydroxyethyl and 2-ethyl-2-hydroxyethyl groups. Further, as for specific examples of the alkoxyalkyl group, they include, for example, 2-methoxyethyl, 3-methoxypropyl, 2-ethoxyethyl and 3-ethoxypropyl groups. Additionally, allyl group, 2-methylallyl group, benzyl group or vinyl group may be introduced into the R of the general formula (1). These compounds can be synthesized by the methods shown, for example, in J. Am. Chem. Soc., Vol. 124, No. 8(2002) 1590.

The RO group in the aforementioned general formula (1) should preferably be constituted by a group that can be polymerized by an acid. As for specific examples of the RO group, they include, for example, vinyl ether group, propenyl ether group, epoxy group, oxetane group and oxolane group. The photosensitizer also takes part in the polymerization reaction to be effected by a polymerization initiator and is hence incorporated into a polymerization reaction product. Further, when the RO group is constituted by a group which is capable of generating OH group through the acidic or thermal dissociation of the RO group also, the photosensitizer takes part in the polymerization reaction to be effected by a polymerization initiator and is hence incorporated into a polymerization reaction product. As for specific examples of such an RO group, they include, for example, tert-butyl group, tert-butoxycarbonyl group, acetal group and a silicone-containing group.

Namely, when the R group in the general formula (1) is polymerized per se, the photos ensitizer becomes part of the polymerized product. Likewise, when the OH group generated by the effects of an acid or heat in the photosensitizer is bonded to a cationic photopolymerizable compound, the photosensitizer becomes part of the polymerized product. When the photosensitizer becomes part of the polymerized product as described above, the degree of polymerization in the polymerization reaction can be further promoted, thereby making it possible to enhance the ultimate cure properties (hardness). As a result, by using the inkjet ink according to the embodiments of the present invention, the durability of the printed matters to be obtained will be enhanced.

The R₁ and R₂ in the aforementioned general formula (1) represent individually hydrogen atom, alkyl group, alkyl sulfonyl group or alkoxy group each group having 1 to 3 carbon atoms. Although all of these groups are effective and present no problem in the present invention, hydrogen atom may be selected for both R₁ and R₂ when easiness of synthesis is taken into account.

As for specific examples of the compounds represented by the aforementioned general formula (1), they include, for example, dialkoxy anthracene such as 9,10-dimethoxy anthracene, 9,10-diethoxy anthracene, 9,10-dipropoxy anthracene, 9,10-dibutoxy anthracene, 2-ethyl-9,10-diethoxy anthracene, and 2,3-diethyl-9,10-diethoxy anthracene; 9,10-diphenoxy anthracene; 9,10-diallyloxy anthracene; 9,10-di(2-methylallyloxy) anthracene; 9,10-divinyloxy anthracene; 9,10-di(2-hydroxyethoxy) anthracene; and 9,10-di(2-methoxyethoxy) anthracene. Although all of these compounds are capable of exhibiting a sufficient effect, the employment of 9,10-dibutoxy anthracene and 9,10-divinyloxy anthracene is especially preferable when the cost for the procurement of compounds as well as the synthesizing raw materials and the safety of compounds are taken into account.

In the inkjet ink according to the embodiments of the present invention, the compound represented by the general formula (1) is mixed with the ink at a ratio of 10 to 50% by weight based on 100% by weight of the polymerization initiator. When the mixing ratio of the compound is less than 10% by weight, it becomes impossible to sufficiently reduce the content of the polymerization initiator. On the other hand, even if the mixing ratio of the compound is increased over 50% by weight, it is impossible to enhance any further the effects of the compound. The mixing ratio of the photosensitizer is required to be adjusted depending on the kinds of pigments to employ or on the color of pigments so as to optimize the mixing ratio thereof. However, a preferable mixing ratio of the photosensitizer is generally confined within the range of 20 to 40% by weight.

As for the cationic photopolymerization initiator, it is possible to employ an onium salt comprising an iodonium cation, a sulfonium cation or a phosphonium cation each constituting a counter ion relative to an anion. As for the iodonium cation for example, it is possible to employ a diaryl iodonium salt represented by the following general formula (2) for instance.

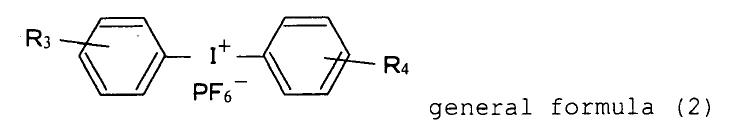

(In the general formula (2), R₃ and R₄ are individually alkyl group).

Further, various photo-acid generating agents can be employed as the cationic photopolymerization initiator, specific examples of the photo-acid generating agents including diazonium salt, quinone diazide compounds, organic halide compounds, aromatic sulfonate compounds, bisulfone compounds, sulfonyl compounds, sulfonate compounds, sulfonium compounds, sulfamide compounds, iodonium compounds, sulfonyl diazomethane compounds and mixtures of these compounds.

Specific examples of the aforementioned compounds include triphenylsulfonium triflate, diphenyliodonium triflate, 2,3,4,4-tetrahydroxybenzophenone-4-naphthoquinone diazide sulfonate, 4-N-phenylamino-2-methoxyphenyl diazonium sulfate, 4-N-phenylamino-2-methoxyphenyldiazonium-p-ethylphenyl sulfate, 4-N-phenylamino-2-methoxyphenyldiazonium-2-naphthyl sulfate, 4-N-phenylamino-2-methoxyphenyldiazonium-phenyl sulfate, 2,5-diethoxy-4-N-4'-methoxyphenylcarbonylphenyldiazonium-3-carboxy-4-hydroxyphenyl sulfate, 2-methoxy-4-N-phenylphenyldiazonium-3-carboxy-4-hydroxyphenyl sulfate, diphenylsulfonyl methane, diphenylsulfonyl diazomethane, diphenyl disulfone, α-methylbenzoin tosylate, pyrogallol trimesylate, benzoin tosylate, MPI-103 (CAS.NO.[87709-41-9]; Midori Kagaku Co., Ltd.), BDS-105 (CAS.NO. [145612-66-4]; Midori Kagaku Co., Ltd.), NDS-103 (CAS.NO.[110098-97-0]; Midori Kagaku Co., Ltd.), MDS-203 (CAS.NO.[127855-15-5]; Midori Kagaku Co., Ltd.), Pyrogallol tritosylate (CAS.NO.[20032-64-8]; Midori Kagaku Co., Ltd.), DTS-102 (CAS.NO.[75482-18-7]; Midori Kagaku Co., Ltd.), DTS-103 (CAS.NO.[71449-78-0]; Midori Kagaku Co., Ltd.), MDS-103 (CAS.NO.[127279-74-7]; Midori Kagaku Co., Ltd.), MDS-105 (CAS.NO.[116808-67-4]; Midori Kagaku Co., Ltd.), MDS-205 (CAS.NO. [81416-37-7]; Midori Kagaku Co., Ltd.), BMS-105 (CAS.NO.[149934-68-9]; Midori Kagaku Co., Ltd.), TMS-105 (CAS.NO.[127820-38-6]; Midori Kagaku Co., Ltd.), NB-101 (CAS.NO.[20444-09-1]; Midori Kagaku Co., Ltd.), NB-201 (CAS.NO.[4450-68-4]; Midori Kagaku Co., Ltd.), DNB-101 (CAS.NO. [114719-51-6]; Midori Kagaku Co., Ltd.), DNB-102 (CAS.NO.[131509-55-2]; Midori Kagaku Co., Ltd.), DNB-103 (CAS.NO.[132898-35-2]; Midori Kagaku Co., Ltd.), DNB-104 (CAS.NO. [132898-36-3]; Midori Kagaku Co., Ltd.), DNB-105 (CAS.NO. [132898-37-4]; Midori Kagaku Co., Ltd.), DAM-101 (CAS.NO. [1886-74-4]; Midori Kagaku Co., Ltd.), DAM-102 (CAS.NO. [28343-24-0]; Midori Kagaku Co., Ltd.), DAM-103 (CAS.NO. [14159-45-6]; Midori Kagaku Co., Ltd.), DAM-104 (CAS.NO. [130290-80-1] and CAS.NO. [130290-82-3]; Midori Kagaku Co., Ltd.), DAM-201 (CAS.NO. [28322-50-1]; Midori Kagaku Co., Ltd.), CMS-105 (Midori Kagaku Co., Ltd.), DAM-301 (CAS.NO.[138529-81-4]; Midori Kagaku Co., Ltd.), SI-105 (CAS.NO.[34694-40-7]; Midori Kagaku Co., Ltd.), NDI-105 (CAS.NO.[133710-62-0]; Midori Kagaku Co., Ltd.); EPI-105 (CAS.NO. [135133-12-9]; Midori Kagaku Co., Ltd.); and UVACURE1591(DAICEL UCB Co., Ltd.).

In the inkjet ink according to the embodiments of the present invention, the mixing ratio of the cationic photopolymerization initiator will be generally confined within the range of 0.5 to 8% by weight based on 100% by weight of the cationic photopolymerizable compound. If the mixing ratio of the cationic photopolymerization initiator is less than 0.5% by weight per 100% by weight of the photopolymerizable compound, the sensitivity of the inkjet ink will be degraded. On the other hand, if the mixing ratio of the cationic photopolymerization initiator is higher than 8% by weight, the increase in viscosity with time of the ink will be intensified thereby degrading the coating properties of the ink and lowering the hardness of the ink film that has been photo-cured and at the same time, erosion of the pipe line and printer head member of the printing apparatus will be caused. Preferably, the mixing ratio of the cationic photopolymerization initiator should be confined within the range of 0.5 to 6% by weight based on 100% by weight of the cationic photopolymerizable compound, a specific mixing ratio of the cationic photopolymerization initiator being suitably determined depending on the acid-generating efficiency and on the quantity of pigments to be added.

The cationic photopolymerizable compound is a compound which can be crosslinked or polymerized in the presence of an acid to be generated as it is irradiated with light in the presence of a cationic photopolymerization initiator and a photosensitizer. Specific examples of such a cationic photopolymerizable compound include those having a molecular weight of not more than 1000 and comprising a cyclic ether group such as epoxy group, oxetane group and oxolane group; acrylic or vinyl compounds having any of the aforementioned substituent groups on their side chains; carbonate-based compounds; low molecular melamin compounds; vinyl ethers; vinyl carbazoles; styrene derivatives; alfa-methylstyrene derivatives; monomers having a cationically polymerizable vinyl linkage such as vinyl alcohol esters such as esters to be derived from vinyl alcohol and acrylic acid, methacrylic acid, etc. These compounds may be used in combination.

It is also possible to employ an acrylic compound having a side chain which is constituted by a terpenoid skeleton. For example, it is possible to employ acrylic compounds disclosed for example in Laid-open Japanese Patent Publication (Kokai) 08-82925 (1996). More specifically, it is possible to employ acrylic or methacrylic acid-added ester compounds which can be obtained by epoxidizing the double bond of terpen having unsaturated linkage such as myrcene, carene, ocimene, pinene, limonene, camphene, terpinolene, tricyclene, terpinene, fenchene, phellandrene, sylvestrene, sabinene, dipentene, bornene, isopregol, carvone, etc.

Alternatively, it is also possible to employ ester compounds to be derived from acrylic acid or methacrylic acid and alcohols originated from terpene such as citronellol, pinocampheol, geraniol, phentyl alcohol, nerol, borneol, linalol, menthol, terpineol, thujyl alcohol, citroneral, ionone, irone, cinerol, citral, pinol, cyclocitral, carvomenthone, ascaridole, safranal, piperithol, menthenemonol, dihydrocarvone, carveol, sclareol, manool, hinokiol, ferruginol, totarol, sugiol, farnesol, patchouli alcohol, nerolidol, carotol, cadinol, lantheol, eudesmol, phytol, etc.

It is also possible to employ acrylic or methacrylic compounds, acrylate or methacrylate monomers, styrene-based monomers, or oligomer compounds having a plurality of vinyl-based polymerizable groups, each of these compounds having, on their ester side chains, a skeleton such as citronellic acid, hinokiic acid, santalic acid, menthone, carvotanacetone, phellandral, pimelitenone, peryl aldehyde, thujone, carone, tagetone, camphor, bisabolene, santalene, zingiberene, caryophyllene, curcumene, cedrene, cadinene, longifolene, sesquibenihene, cedrol, guaiol, kessoglycol, cyperone, eremophilone, zerumbone, campholene, podocarprene, mirene, phyllocladene, totalene, ketomanoyl oxide, manoyl oxide, abietic acid, pimaric acid, neoabietic acid, levopimaric acid, iso-d-pimaric acid, agathene dicarboxylic acid, rubenic acid, carotenoid, pelary aldehyde, piperitone, ascaridole, pimene, fenchene, sesquiterpenes, diterpenes, triterpenes, etc.

Any of the monomer materials described above can be generally employed as long as they are capable of exhibiting a sufficient fluidity at ordinary temperatures. Incidentally, if the viscosity of a compound at ordinary temperatures is 50 mPa·s or less, the compound may be said as having a sufficient fluidity. For example, it is possible to employ polyacrylate compounds of polyhydric alcohol compounds, polyacrylate compounds of polyhydric aromatic alcohols, polyacrylate compounds of polyhydric alicyclic alcohols, and styrene compounds having a substituent group. As for the specific examples of such monomers, they include, for example, di- or polyacrylate compounds of ethylene glycol, polyethylene glycol, propylene glycol, glycerin, neopentyl alcohol, trimethylol propane, pentaerythritol, vinyl alcohol-based oligomers; di- or polyacrylate compounds of phenol, cresol, naphthol, bisphenol, novolac-based condensation compounds of these aromatic compounds, and vinyl phenolic oligomers; and mono- or polyacrylate compounds of hydrogenated cyclohexane, hydrogenated bisphenol, decahydronaphthalene alicyclic compounds, terpene-based alicyclic compounds, and di- or polyhydroxyl compounds of dicyclopentane or tricyclodecane-based alicyclic compounds.

As for the pigments to be employed in the present invention, there is not any particular limitation and hence any kinds of pigments can be employed as long as they are capable of developing desired optical coloring and tinting features and they have an average particle diameter of 300 nm or less. The reason for limiting the average particle diameter of the pigments to 300 nm or less is that if the average particle diameter of the pigments is larger than 300 nm, discharge failure may occur quite frequently on the occasion of discharging the ink from the inkjet printer head. Accordingly, the average particle diameter of the pigments should preferably be 200 nm or less, more preferably 180 nm or less. The diameter of the pigments can be determined by the following procedures for instance. Namely, first of all, an ink sample is diluted about 500-fold with a solvent and then, this diluted sample is subjected to a particle size measuring process using a dynamic light scattering method and then to cumulant analysis to calculate the cumulant average particle diameter of the pigments. The value thus obtained is assumed as being an average particle diameter of the pigments.

The pigments to be employed in the present invention may be further provided with other properties such as magnetism, fluorescence, conductivity, dielectric property, etc. in addition to the coloring and tinting properties. If the pigments are provided with these various properties, it may become possible to obtain an image having various functions. Further, the pigments may contain particles which are effective in providing an ink layer with increased heat resistance or physical strength.

As for the examples of pigments useful in the present invention, they include photoabsorption pigments for example. Specific examples of such photoabsorption pigments include carbonaceous pigment such as carbon black, carbon refined and carbon nanotube; metal oxide pigments such as iron black, cobalt blue, zinc oxide, titanium oxide, chromium oxide and iron oxide; sulfide pigments such as zinc sulfide; phthalocyanine pigments; pigments formed of salts such as metal sulfate, metal carbonate, metal silicate and metal phosphate; and pigments formed of metal powder such as aluminum powder, bronze powder and zinc powder.

Further, it is also possible to employ organic pigments, for example, dye chelate; nitro pigments; aniline black; nitroso pigments such as naphthol green B; azo pigments (including azo lake, insoluble azo pigment, condensed azo pigment, chelate azo pigment) such as Bordeaux 10B, Lake red 4R and chromophthal red; Lake pigments such as Peacock blue lake and Rhodamine lake; phthalocyanine pigments such as phthalocyanine blue; polycyclic pigments (such as perylene pigment, perinone pigment, anthraquinone pigment, quinacridone pigment, dioxane pigment, thioindigo pigment, isoindolinone pigment, quinophtharone pigment, etc.); threne pigments such as thioindigo red and indanthrone blue; quinacridone pigment; quinacridine pigment and isoindolinone pigment.

As for the pigments that can be employed in a black ink, examples thereof include carbon black such as Raven 5750, Raven 5250, Raven 5000, Raven 3500, Raven 1255 and Raven 700 (Colombia Co., Ltd.); Regal 400R, Regal 330R, Regal 660R, Mogul L, Monarch 700, Monarch 800, Monarch 880, Monarch 900, Monarch 1000, Monarch 1100, Monarch 1300 and Monarch 1400 (Cabot Co., Ltd.); No. 2300, No. 900, MCF88, No. 33, No. 40, No. 45, No. 52, MA7, MA8, MA100 and No. 2200B (Mitsubishi Chemical Co., Ltd.); Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 (Degussa Co., Ltd.).

As for the pigments that can be employed in a yellow ink, examples thereof include C.I. Pigment Yellow 128, C.I. Pigment Yellow 129, C.I. Pigment Yellow 151, C.I. Pigment Yellow 154, C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 114, C.I. Pigment Yellow 139, C.I. Pigment Yellow 150 and C.I. Pigment Yellow 180. Among these yellow pigments, the employment of Pigment Yellow 180 is more preferable since this yellow pigment is excellent in resistance to discoloration to be caused by an acid.

As for the pigments that can be employed in a magenta ink, examples thereof include C.I. Pigment Red 123, C.I. Pigment Red 168, C.I. Pigment Red 184, C.I. Pigment Red 202, C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Violet 19 and C.I. Pigment Red 112.

Further, as for the pigments that can be employed in a cyan ink, examples thereof include C.I. Pigment Blue 15:3, C.I. Pigment Blue 15:34, C.I. Pigment Blue 16, C.I. Pigment Blue 22, C.I. Pigment Blue 60, C.I. Pigment Blue 1, C.I. Pigment Blue 2, C.I. Pigment Blue 3, C.I. Vat Blue 4, and C.I. Vat Blue 60.

Further, it is also possible to employ white pigments such as natural clay, metal carbonates such as white lead, zinc white and magnesium carbonate; metal oxides such as barium oxide and titanium oxide. The inkjet ink containing white pigments can be employed not only in white printing but also in the amendments of printing or underlying images through overwriting.

As for fluorescent pigments, it is possible to employ either inorganic fluorescence materials but also organic fluorescence materials. As for the inorganic fluorescence materials, specific examples of which include MgWO₄, CaWO₄, (Ca,Zn)(PO₄)₂:Ti⁺, Ba₂P₂O₇:Ti, BaSi₂O₅:Pb²⁺, Sr₂P₂O₇:Sn²⁺, SrFB₂O_{3.5}:Eu²⁺, MgAl₁₆O₂₇:Eu²⁺, and inorganic acid salts such as tungstenate and sulfate. As for the organic fluorescence materials, specific examples of which include acridine orange, amino acridine, quinacrine, anilinonaphthalene sulfonate derivatives, anthroyl oxystearic acid, auramine O, chlorotetracycline, cyanine dye such as merocyanine and 1,1'-dihexyl-2,2'-oxacarbocyanine, dansyl sulfonamide, dansyl choline, dansyl galactoside, dansyl tolidine, dansyl chloride derivatives such as dansyl chloride, diphenyl hexatriene, eosin, ε-adenosine, ethidium bromide, fluorescein, foamycine, 4-benzoylamide-4'-aminostilbene-2,2'-sulfonic acid, β-naphthyl triphosphic acid, oxonol dye, parinaric acid derivatives, perylene, N-phenylnaphthyl amine, pyrene, safranine O, fluorescamine, fluorescein isocyanate, 7-chloronitrobenzo-2-oxa-1,3-diazole, dansylaziridine, 5-(iodoacetamide ethyl) aminonaphthalene-1-sulfonic acid, 5-iodoacetamide fluorescein, N-(1-anilinonaphthyl 4) maleimide, N-(7-dimethyl-4-methylcumanyl) maleimide, N-(3-pyrene) maleimide, eosin-5-iodoacetamide, fluorescein mercury acetate, 2-[4'-(2"-iodoacetamide)]aminonaphthalene-6-sulfonic acid, eosin, Rhodamine derivatives, organic electroluminescent dye, organic electroluminescent polymer, organic electroluminescent crystal and dendrimer.

The mixing ratio of the pigments should preferably be confined within the range of 1 to 25% by weight per 100% by weight of the ink. If the mixing ratio of the pigments is less than 1% by weight, it may become difficult to secure a sufficient color density. On the other hand, if the mixing ratio of the pigments is higher than 25% by weight, the discharging property of the ink will be degraded. More preferably, the mixing ratio of the pigments in the ink should be confined within the range of 2 to 8% by weight.

The inkjet ink according to the embodiments of the present invention can be prepared by a process wherein a pigment is dispersed in a solvent and then, subjected to a dispersion treatment using a dispersing machine. Among the aforementioned components, the cationic polymerizable compounds act as a solvent in the inkjet ink according to the embodiments of the present invention. As for the dispersing machine, those commonly employed are useful. Specific examples of the dispersing machine include, among others, a sand mill, a ball mill, a roll mill and an ultrasonic dispersing machine. It is also possible to employ a media-less dispersing machine. In the dispersing treatment, a dispersant may be added to the ink so as to enhance the dispersing efficiency of pigments. As for the dispersant, it is possible to employ, for example, nonionic or ionic surfactants and charge control agents. Further, it is also possible to employ polymer type dispersants such as acryl and vinyl alcohol. Although the mixing ratio of the dispersants may be suitably determined depending on the kinds of pigments and on the solvents, the mixing ratio of the dispersants may generally range from 20 to 70% by weight based on the quantity of pigments.

The viscosity of the inkjet ink according to the embodiments of the present invention to be prepared as described above should preferably be confined to 50 mPa·s or less at ordinary temperature (25°C). If the viscosity of the inkjet ink is higher than 50 mPa·s, it may become difficult to satisfactorily discharge the ink from the inkjet printer head.

The inkjet ink according to the embodiments of the present invention is employed by using an inkjet printer head for recording an image wherein droplets of the ink are ejected to a base material from the printer head. Although there is not any particular limitation with respect to the structure of the printer head, the employment of the inkjet ink according to the present invention is especially effective in the case where the printer head is constructed such that a metallic member such as an electrode is located on the inner wall of the passageway of ink at the ink discharge portion of the printer head or at the ink supply system so that the ink contacts with the metallic member.

It has been found out by the present inventors that the acid to be generated from cationic photopolymerization initiators would cause erosion of a metallic member. In the case of electrodes in particular, when an electric voltage is applied to the electrodes, the generation of an acid from the cationic photopolymerization initiator in the ink is promoted, so that the electrodes or a metallic member employed as an underlying layer of the electrodes is more likely to be eroded by the acid. As a result, because of the metallic pieces from the electrodes that have been peeled off due to the erosion thereof, the flow of the ink at the nozzle portion would be disturbed, thus making it impossible to perform normal discharge of the ink. In the worst case, it may be no longer possible to normally actuate the printer head, thus instabilizing the discharge of ink.

The problems mentioned above can be obviated by decreasing as much as possible the concentration of the cationic photopolymerization initiator. More specifically, when the concentration of the cationic photopolymerization initiator is limited to not more than 8% by weight per 100% by weight of the polymerizable compound of the ink, it is possible to obviate the problems originating from the photopolymerization initiator. However, when the mixing ratio of the photopolymerization initiator is reduced, the curing properties of the ink would be deteriorated accordingly.

In the case of the inkjet ink according to the embodiments of the present invention however, a specific kind of photosensitizer is incorporated in the ink, so that even if the mixing ratio of the photopolymerization initiator is decreased to not more than 8% by weight per 100% by weight of the polymerizable compound, it is now possible to secure a prescribed degree of the hardness of the ink after the photopolymerization of the ink. Moreover, since the photosensitizer per se is incapable of giving any adverse effects to the storage stability of the ink, it is now possible to greatly enhance the storage stability of the ink due to the reduction in quantity of the cationic photopolymerization initiator.

Even in the case of the printed matters which have been printed by using the inkjet ink according to the embodiments of the present invention, the erosion of the printed matters due to the effects of the acid can be minimized owing to the aforementioned reasons. Whereas, in the case of the conventional inkjet ink however, since the acid that has been generated during the polymerization reaction is not necessarily consumed completely, the acid may remain on the printed matters. In this case, there will be raised various problems that the paper of printed matters erode or the safety of the printed matters per se is deteriorated. In the case of the present invention however, since the mixing ratio of the cationic photopolymerization initiator can be reduced due to the addition of a photosensitizer to the ink, the quantity of acid to be generated can be effectively suppressed and the acid can be effectively consumed, it is now possible to minimize the aforementioned problems.

As already described above, when the substituent group R in the aforementioned general formula (1) is constituted by a group which generates OH group through the acidic or thermal dissociation thereof, the polymerization degree of the cationic photopolymerization initiator can be enhanced, thereby making it possible to improve the curing characteristics of the ink. In this case, the layer of ink printed is heated at least at a sufficiently high temperature so as to enable the dissociation of the substituent group R to occur subsequent to the irradiation of light to the ink layer. Since the temperature of heating required for the dissociation differs depending on the kinds of the substituent group, the specific temperature can be suitably selected depending on the kinds of the substituent group. For example, if the substituent group R is constituted by tert-butyl group, the heating temperature should be set to 150°C or more, and if the substituent group R is constituted by acetal group, the heating temperature should be set to 60°C or more.

As described above, the inkjet ink according to the embodiments of the present invention is excellent in discharge stability as well as in storage stability and hence, it is now possible, by using this inkjet ink, to perform printing of high-quality.

Next, the present invention will be further explained in detail with reference to the following specific examples.

### (Example 1)

A yellow pigment dispersion was prepared according to the following recipe.

| | |
|---|---|
| Yellow pigment (PY-180) | 10% by weight |
| Dispersant (Avecia; Solsperse 32000) | 3% by weight |
| Dispersant (Avecia; Solsperse 22000) | 0.3% by weight |
| Solvent | |
| (DAICEL Chemicals; Celoxide3000) | 86.7% by weight |

Beads having a diameter of 0.3 mm was charged in a recycle type sand mill and a mixture comprising these raw materials was subjected to dispersion treatment for one hour to obtain a dispersed liquid, which was then used to obtain a mixture having the following formulation, thereby forming an ink composition containing a pigment at a concentration of 5% by weight. Then, a compound represented by the following chemical formula (3) was added as a photosensitizer to the aforementioned ink composition to prepare the inkjet ink of this example.

| | |
|---|---|
| Dispersed liquid | 50.0% by weight |
| Solvent (DAICEL Chemicals; Celoxide3000) | 45.3% by weight |
| Polymerization initiator | |
| (DAICEL Chemicals; UVACURE1591) | 3.6% by weight |
| Photosensitizer | 1.1% by weight |

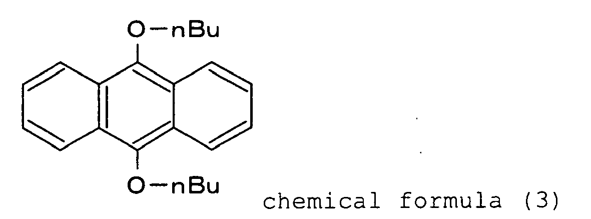

In this case, the Celoxide3000 employed as a solvent corresponds to the cationic photopolymerizable compound. The mixing ratio of the cationic photopolymerization initiator was 4.0% by weight per 100% by weight of the cationic photopolymerizable compound. Further, the mixing ratio of the photosensitizer was 30.0% by weight per 100% by weight of the cationic photopolymerization initiator. By using the inkjet ink thus obtained, a photosensitivity test, an erosion test and a storage stability test were performed.

In the photosensitivity test, by a bar coater, the ink was coated on an OHP film to obtain a film having a thickness of about 6 *µ*m. Then, by using Light Hammer 6 (Fusion Co., Ltd.), the coated film was subjected to irradiation of light at an integrated dosage of 140 mJ/cm², which was followed by one-minute heating at a temperature of 100°C to obtain a sample. The sample thus obtained was evaluated by a pencil hardness test, finding that this sample had a hardness of H or more. Incidentally, it may be said that the hardness level of H or more is judged acceptable in this case.

In the erosion test, by using a tandem type model electrode (made of Ni) having an electrode width of 80 *µ*m, a rectangular wave of 48 kHz and ±20V was applied to the electrode immersed in the ink. One week later, the surface of the electrode was observed by SEM. As a result, the erosion of the electrode was not recognized in any substantial degree.

In the storage stability test, the average particle diameter of the pigment in the ink immediately after the preparation of the ink was compared with the average particle diameter of the pigment in the ink that had been stored for 10 days at a temperature of 65°C to evaluate the storage stability of the ink. The average particle diameter of the pigment was determined by using HPPS particle diameter-measuring apparatus (manufactured by Malvern Co., Ltd.). As a result, the average particle diameter of the pigment in the ink immediately after the preparation of the ink was found 161 nm, while the average particle diameter of the pigment after the aforementioned storage was found 176 nm. Incidentally, any increase of particle size up to about 1.3 times is considered as substantially having little influence on the performance of the ink and hence considered as falling within the acceptable range.

### (Comparative Example 1)

By using the same dispersed liquid as employed in the aforementioned Example 1 and, at the same time, by incorporating a solvent and a polymerization initiator into the dispersed liquid according to the following recipe, an inkjet ink having a pigment at a concentration of 5% by weight was obtained.

| | |
|---|---|
| Dispersed liquid | 50.0% by weight |
| Solvent | |
| (DAICEL Chemicals; Celoxide3000) | 40.0% by weight |
| Polymerization initiator (DAICEL Chemicals; UVACURE1591) | 10.0% by weight |

In this Comparative Example 1, the mixing ratio of the cationic photopolymerization initiator was 12.0% by weight per 100% by weight of the cationic photopolymerizable compound, and the photosensitizer was not incorporated at all. Then, in the same manner as described in Example 1, a photosensitivity test, an erosion test and a storage stability test were performed on the inkjet ink thus obtained. As a result, although the ink thus cured indicated a hardness of H, the erosion of the electrode was recognized partially and part of the electrode was peeled off as a result of the erosion test. Further, the average particle diameter of the pigment in the ink immediately after the preparation of the ink was found 171 nm, while the average particle diameter of the pigment after the storage thereof for 10 days at a temperature of 65°C was increased to as large as 280 nm.

### (Comparative Example 2)

By using the same dispersed liquid as employed in the aforementioned Example 1 and, at the same time, by incorporating a solvent and a polymerization initiator into the dispersed liquid according to the following recipe, an inkjet ink having a pigment at a concentration of 5% by weight was obtained.

| | |
|---|---|
| Dispersed liquid | 50.1% by weight |
| Solvent | |
| (DAICEL Chemicals; Celoxide3000) | 46.3% by weight |
| Polymerization initiator | |
| (DAICEL Chemicals; UVACURE1591) | 3.6% by weight |

In this Comparative Example 2, the mixing ratio of the cationic photopolymerization initiator was about 4.0% by weight per 100% by weight of the cationic photopolymerizable compound, and the photosensitizer was not incorporated at all. Then, in the same manner as described in Example 1, a photosensitivity test, an erosion test and a storage stability test were performed on the inkjet ink thus obtained. As a result, although the erosion of the electrode was not recognized in any substantial manner in the erosion test, the ink thus cured indicated a hardness of HB, indicating insufficiency in hardness. Further, the average particle diameter of the pigment in the ink immediately after the preparation of the ink was found 169 nm, while the average particle diameter of the pigment after the storage thereof for 10 days at a temperature of 65°C was 179 nm.

### (Example 2)

A cyan pigment dispersion was prepared according to the following recipe.

| | |
|---|---|
| Pigment (Hostaperm Blue B2G) | 10% by weight |
| Dispersant (Avecia; Solsperse 32000) | 3% by weight |
| Chief material | |
| (DAICEL Chemicals; Celoxide 3000) | 87% by weight |

Beads having a diameter of 0.3 mm was charged in a recycle type sand mill and a mixture comprising these raw materials was subjected to dispersion treatment for one hour to obtain a dispersed liquid, which was then used to obtain a mixture having the following formulation, thereby forming an ink composition containing a pigment at a concentration of 5% by weight. Then, the compound employed in Example 1 was added as a photosensitizer to the aforementioned ink composition to prepare the inkjet ink of this example.

| | |
|---|---|
| Dispersed liquid | 50.0% by weight |
| Solvent | |
| (DAICEL Chemicals; Celoxide3000) | 45.3% by weight |
| Polymerization initiator | |
| (DAICEL Chemicals; UVACURE1591) | 3.6% by weight |
| Photosensitizer | 1.1% by weight |

In this case, the mixing ratio of the cationic photopolymerization initiator was about 4.0% by weight per 100% by weight of the cationic photopolymerizable compound. Further, the mixing ratio of the photosensitizer was 30.0% by weight per 100% by weight of the cationic photopolymerization initiator. By using the inkjet ink thus obtained, a photosensitivity test, an erosion test and a storage stability test were performed in the same manner as conducted in Example 1. As a result, the ink thus cured indicated a hardness of H. The erosion of the electrode was not recognized in any substantial degree. The average particle diameter of the pigment in the ink immediately after the preparation of the ink was found 123 nm, while the average particle diameter of the pigment after the storage thereof for 10 days at a temperature of 65°C was 131 nm, indicating that it was possible to suppress the flocculation of pigments.

Further, the same procedures as described above were repeated except that a black pigment (PBk-7) and a magenta pigment (Toner Magenta E-02) were employed respectively as a pigment to prepare inkjet inks, which were then respectively evaluated. As a result, both of these inks all indicated a hardness of H, and no problem was recognized with respect to the erosion of electrode in these inks. The average particle diameter of the pigment in the ink immediately after the preparation of the ink was 111 nm in the case of the black ink and 166 nm in the case of the magenta ink, while the average particle diameter of the pigment after the storage thereof for 10 days at a temperature of 65°C was 120 nm in the case of the black ink and 175 nm in the case of the magenta ink. It will be recognized from these results that it was possible to suppress the flocculation of pigments.

### (Example 3)

The same procedures as described in the aforementioned Example 2 were repeated except that the compound represented by the following chemical formula (4) was employed as a photosensitizer, thereby preparing the inkjet ink of this example.

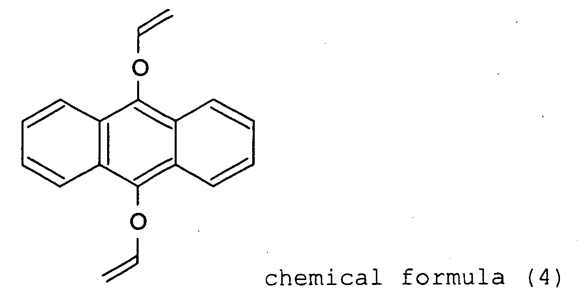

Then, a photosensitivity test, an erosion test and a storage stability test were performed on the resultant inkjet ink in the same manner as conducted in Example 1. As a result, the ink thus cured indicated a hardness of H. The erosion of the electrode was not recognized in any substantial degree. The average particle diameter of the pigment in the ink immediately after the preparation of the ink was found 125 nm, while the average particle diameter of the pigment after the storage thereof for 10 days at a temperature of 65°C was 136 nm, indicating that it was possible to suppress the flocculation of pigments.

### (Example 4)

The same procedures as described in the aforementioned Example 2 were repeated except that the compound represented by the following chemical formula (5) was employed as a photosensitizer, thereby preparing the inkjet ink of this example.

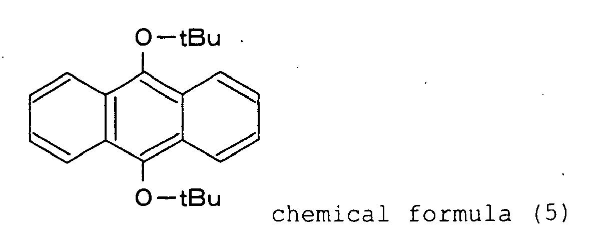

Then, a photosensitivity test, an erosion test and a storage stability test were performed on the inkjet ink thus obtained.

In the photosensitivity test, by a bar coater, the ink was coated at first on an aluminum sheet to obtain a film having a thickness of about 6 *µ*m. Then, by using Light Hammer 6 (Fusion Co., Ltd.), the coated film was subjected to irradiation of light at an integrated dosage of 140 mJ/cm², which was followed by two-minute heating at a temperature of 150°C to obtain a sample. The sample thus obtained was evaluated by a pencil hardness test, finding that the hardness of this sample was 2H. Incidentally, it should be noted that the hardness level of H or more is acceptable in this case.

Then, an erosion test and a storage stability test were performed on the resultant inkjet ink in the same manner as conducted in Example 1. As a result, the erosion of the electrode was not recognized in any substantial degree in the erosion test. The average particle diameter of the pigment in the ink immediately after the preparation of the ink was found 121 nm, while the average particle diameter of the pigment after the storage thereof for 10 days at a temperature of 65°C was 133 nm, indicating that it was possible to suppress the flocculation of pigments.

### (Example 5)

The same procedures as described in the aforementioned Example 2 were repeated except that the compound represented by the following chemical formula (6) was employed as a photosensitizer, thereby preparing the inkjet ink of this example.

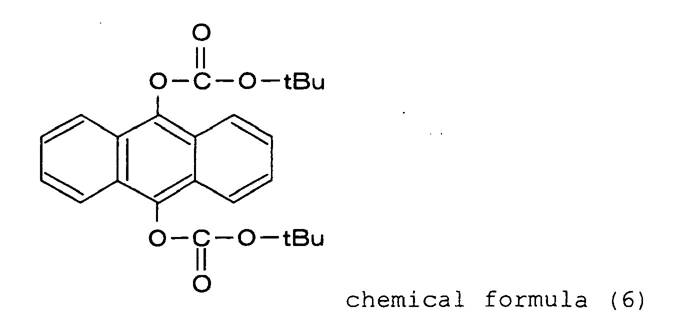

Then, a photosensitivity test, an erosion test and a storage stability test were performed on the inkjet ink thus obtained. The photosensitivity test was performed by following the same procedures as conducted in the aforementioned Example 4 except that the temperature of heating after the irradiation of light was set to 80°C. The erosion test and the storage stability test were performed on the resultant inkjet ink in the same manner as conducted in Example 1. As a result, the ink thus cured indicated a hardness 2H and the erosion of the electrode was not recognized in any substantial degree in the erosion test. The average particle diameter of the pigment in the ink immediately after the preparation of the ink was found 126 nm, while the average particle diameter of the pigment after the storage thereof for 10 days at a temperature of 65°C was 139 nm, indicating that it was possible to suppress the flocculation of pigments.

### (Example 6)

The same procedures as described in the aforementioned Example 2 were repeated except that the compound represented by the following chemical formula (7) was employed as a photosensitizer, thereby preparing the inkjet ink of this example.

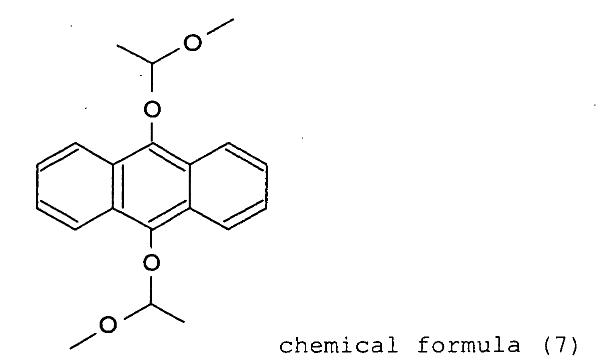

Then, a photosensitivity test, an erosion test and a storage stability test were performed on the inkjet ink thus obtained. The photosensitivity test was performed by following the same procedures as conducted in the aforementioned Example 4 except that the temperature of heating after the irradiation of light was set to 60°C. The erosion test and the storage stability test were performed on the resultant inkjet ink in the same manner as conducted in Example 1. As a result, the ink thus cured indicated a hardness H and the erosion of the electrode was not recognized in any substantial degree in the erosion test. The average particle diameter of the pigment in the ink immediately after the preparation of the ink was found 121 nm, while the average particle diameter of the pigment after the storage thereof for 10 days at a temperature of 65°C was 136 nm, indicating that it was possible to suppress the flocculation of pigments.

### (Example 7)

The same procedures as described in the aforementioned Example 2 were repeated except that the compound represented by the following chemical formula (8) was employed as a photosensitizer, thereby preparing the inkjet ink of this example.

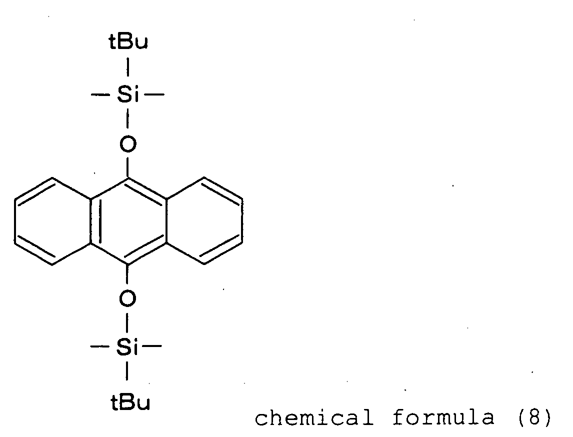

Then, a photosensitivity test, an erosion test and a storage stability test were performed on the inkjet ink thus obtained. The photosensitivity test was performed by following the same procedures as conducted in the aforementioned Example 4 except that the temperature of heating after the irradiation of light was set to 40°C. The erosion test and the storage stability test were performed on the resultant inkjet ink in the same manner as conducted in Example 1. As a result, the ink thus cured indicated a hardness H and the erosion of the electrode was not recognized in any substantial degree in the erosion test. The average particle diameter of the pigment in the ink immediately after the preparation of the ink was found 127 nm, while the average particle diameter of the pigment after the storage thereof for 10 days at a temperature of 65°C was 136 nm, indicating that it was possible to suppress the flocculation of pigments.

### (Example 8)

The same procedures as described in the aforementioned Example 2 were repeated except that the compound represented by the following chemical formula (9) was employed as a photosensitizer, thereby preparing the inkjet ink of this example.

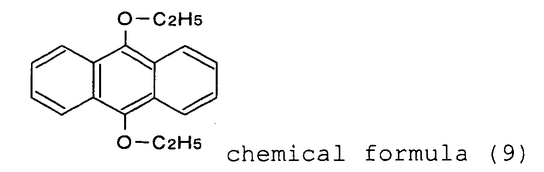

Then, in the same manner as described in Example 1, a photosensitivity test, an erosion test and a storage stability test were performed on the inkjet ink thus obtained. As a result, the ink thus cured indicated a hardness H and the erosion of the electrode was not recognized in any substantial degree in the erosion test. The average particle diameter of the pigment in the ink immediately after the preparation of the ink was found 120 nm, while the average particle diameter of the pigment after the storage thereof for 10 days at a temperature of 65°C was 134 nm, indicating that it was possible to suppress the flocculation of pigments.

### (Example 9)

The same procedures as described in the aforementioned Example 2 were repeated except that the compound represented by the following chemical formula (10) was employed as a photosensitizer, thereby preparing the inkjet ink of this example.

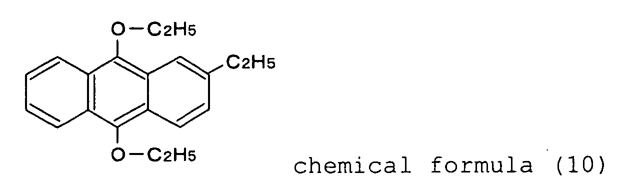

Then, in the same manner as described in Example 1, a photosensitivity test, an erosion test and a storage stability test were performed on the inkjet ink thus obtained. As a result, the ink thus cured indicated a hardness H and the erosion of the electrode was not recognized in any substantial degree in the erosion test. The average particle diameter of the pigment in the ink immediately after the preparation of the ink was found 123 nm, while the average particle diameter of the pigment after the storage thereof for 10 days at a temperature of 65°C was 133 nm, indicating that it was possible to suppress the flocculation of pigments.

The present invention provides, as one aspect, an inkjet ink comprising pigment particles which are stably dispersed therein without being flocculated, and, as another aspect, a printed matter to be obtained by using the inkjet ink, and moreover, as a further aspect, an inkjet recording method wherein the aforementioned inkjet ink is employed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An inkjet ink **characterized by** comprising:
a compound represented by the following general formula (1);
a cationic photopolymerization initiator;
a cationic photopolymerizable compound; and
a pigment having an average particle diameter of 300 nm or less;
wherein the cationic photopolymerization initiator is included at a ratio of 0.5% by weight to 8% by weight based on 100% by weight of the cationic photopolymerizable compound, and the inkjet ink has a viscosity of 50 mPa·sec or less at ordinary temperatures; 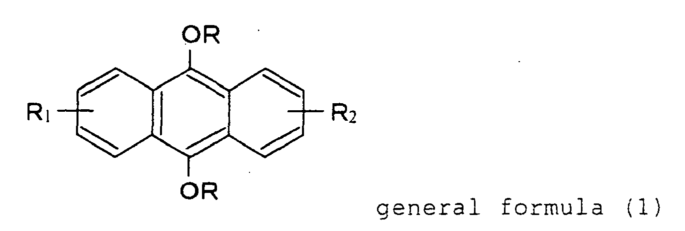
wherein R is a monovalent organic group having 1 to 5 carbon atoms; R₁ and R₂ may be the same or different and are individually a hydrogen atom or an alkyl group, an alkyl sulfonyl group or an alkoxy group each having 1 to 3 carbon atoms.

2. The inkjet ink according to claim 1, **characterized in that** the OR group in the general formula (1) is a group which polymerizes in the presence of an acid.

3. The inkjet ink according to claim 1, **characterized in that** the OR group in the general formula (1) is a vinyl ether group or a propenyl ether group.

4. The inkjet ink according to claim 1, **characterized in that** the OR group in the general formula (1) is constituted by a group which generates OH group through the acidic and/or thermal dissociation of the RO group.

5. The inkjet ink according to claim 4, **characterized in that** the R group in the general formula (1) is an acetal group

6. The inkjet ink according to claim 4, **characterized in that** the R group in the general formula (1) is a silicone-containing group.

7. The inkjet ink according to claim 1, **characterized in that** the R group in the general formula (1) is a linear or branched alkyl or allyl group, aryl group, benzyl group, hydroxyalkyl group or alkoxyalkyl group each having 1 to 5 carbon atoms.

8. The inkjet ink according to claim 7, **characterized in that** the R group in the general formula (1) is a tert-butyl group.

9. The inkjet ink according to claim 7, **characterized in that** the R group in the general formula (1) is a tert-butoxycarbonyl group.

10. The inkjet ink according to claim 1, **characterized in that** the compound represented by the general formula (1) is 9,10-dibutoxy anthracene.

11. The inkjet ink according to claim 1, **characterized in that** the compound represented by the general formula (1) is 9, 10-diethoxy anthracene.

12. The inkjet ink according to any one of claims 1 to 11, **characterized in that** the compound represented by the general formula (1) is included in the ink at a ratio of 10 to 50% by weight based on 100% by weight of the cationic photopolymerization initiator.

13. The inkjet ink according to any one of claims 1 to 12, **characterized in that** the cationic photopolymerization initiator comprises a compound represented by the following general formula (2): 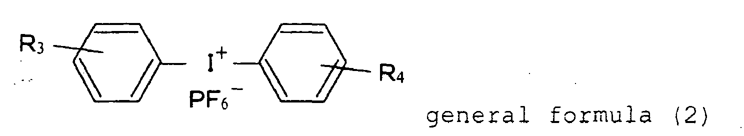
wherein R₃ and R₄ are individually an alkyl group.

14. A printed matter comprising a cured layer of the inkjet ink claimed in any one of claims 1 to 13.

15. An inkjet recording method **characterized by** comprising
feeding the inkjet ink claimed in any one of claims 1 to 13 to an ink supply passageway;
discharging the inkjet ink from an inkjet printer head to a recording medium; and
irradiating radiation to the inkjet ink which has been discharged to the recording medium to cure the inkjet ink;
wherein the inkjet ink contacts with a metallic member as the inkjet ink passes through the ink supply passageway and/or the inkjet printer head.

16. An inkjet recording method **characterized by** comprising
feeding the inkjet ink claimed in claim 4 to an ink supply passageway;
discharging the inkjet ink from an inkjet printer head to a recording medium;
irradiating radiation to the inkjet ink which has been discharged to the recording medium to precure the inkjet ink; and
heating the precured inkjet ink at a temperature which is not lower than that makes it possible to dissociate the RO group of the compound contained in the inkjet ink and represented by the general formula (1);
wherein the inkjet ink contacts with a metallic member as the inkjet ink passes through the ink supply passageway and/or the inkjet printer head.

17. The method according to claim 16, **characterized in that** R in the compound represented by the general formula (1) and included in the inkjet ink isa tert-butyl group, and the temperature of heating after the precuring of the inkjet ink is 150°C or more.

18. The method according to claim 16, **characterized in that** R in the compound represented by the general formula (1) and included in the inkjet ink is an acetal group, and the temperature of heating after the precuring of the inkjet ink is 60°C or more.
